# EUROPEAN PATENT SPECIFICATION

(11) **EP 1 445 178 B1**
(45) Date of publication and mention of the grant of the patent: **15.04.2009**
(21) Application number: 03425070.4
(22) Date of filing: 06.02.2003
(51) Int. Cl.: B62D 33/02

(54) **Floor of a vehicle for load carrying**
Boden eines Lastkraftwagens
Plancher pour véhicule de transport

(43) Date of publication of application: 11.08.2004
(73) Proprietor: Aghito Sistemi S.r.l., 35027 Noventa Padovana (Padova) (IT)
(72) Inventor: Tognin, Sergio c/o Aghito Sistemi S.r.l., 35027 Noventa Padovana (Padova) (IT)
(74) Representative: Botti, Mario

(56) References cited:
- EP-A- 0 787 643
- EP-A- 0 823 368
- EP-A- 0 915 006
- DE-A- 3 906 628
- US-A- 5 054 843
- US-A- 5 417 453

## Description

### Field of Application

The present invention relates to a floor of a vehicle for load carrying, for example a commercial vehicle, an industrial vehicle and the like, which comprises a plate-like flat structure mounted on a vehicle main frame.

As it is known, the floor is expected to be sufficiently strong to take the weight of its load, both loose and manufactured goods, directly loaded or with proper pallets without yielding, without significant deformations or breakage, over long routes on roads where maintenance condition may be not perfect.

This requirement is currently met by floors having a plate-like flat structure, e.g. of wood, arranged to rest on the vehicle main frame, commonly reticular, metallic frame, such as steel.

While being advantageous in several respects and performing fairly satisfactorily, such prior floors have a drawback, accepted so far, in that their complicated construction reflects on extended manufacturing times and, as a consequence, long periods for delivering the desired vehicle.

EP 0 787 643 A discloses a floor for a vehicle for load carrying, for example a commercial or industrial vehicle, comprising a plate-like flat structure adapted to be mounted on longitudinal members of the main frame of the vehicle, wherein the plate-like flat structure comprises a framework which forms a portion of the main frame when mounted and a board including a number of layers, wherein one layer having a cellular matrix is sandwiched between top and bottom layers, both of limited thickness compared to that of the cellular matrix-layer.

Transverse rod-like insert are embedded in the thickness of the cellular matrix layer.

The underlying problem of this invention is to provide a floor as indicated, having structural and functional features to obviate the above drawback.

The problem is solved by a floor as indicated, wherein transverse rod-like inserts which are part of the framework and form cross-members of the main frame when mounted are embedded in the thickness of the cellular matrix layer, resulting in a composite, structurally monolithic and self-supporting floor.

Further features and the advantages of the floor according to the invention should become apparent from the following description of an embodiment thereof, given by way of non-limitative example with reference to the accompanying drawings.

### Brief Description of the Drawings

Figure 1 is a schematic perspective view of a vehicle incorporating the floor of this invention.
Figure 2 is a cutaway perspective view, drawn to an enlarged scale, of the floor shown in Figure 1.
Figure 3 is an exploded perspective view, drawn to an even larger scale, of a detail of the floor shown in Figure 2.
Figure 4 is a perspective view of a vehicle incorporating a modified version of the floor of this invention.
Figure 5 is a cutaway perspective view, drawn to an enlarged scale, of the floor shown in Figure 4.
Figure 6 is an exploded perspective view, drawn to an even larger scale, of a detail of the floor shown in Figure 5.

With reference to the enclosed drawings, a floor according to the invention is generally shown with 1.

The floor 1 is part of a vehicle 2 for load carrying, which, in the example, is a commercial or industrial vehicle, specifically a small truck. The vehicle 2 is provided with a frame 3 whereon the floor 1 is mounted.

The floor 1 comprises a plate-like flat structure 4, which has a rectangular outline, with its long sides or edges extending lengthwise and coinciding with the motion direction of the vehicle, and with short sides or edges extending according to a crosswise direction, perpendicularly to said motion direction.

The plate-like flat structure 4 comprises a board 5 including a number of layers 6, 7, 8. In particular, the board 5 comprises a middle layer 6, which has prevalent thickness. The layer 6 is sandwiched between a top layer 7 and a bottom layer 8, both of limited thickness.

The middle layer 6 has a thickness "a" selected between 30 and 70 mm. It has cellular matrix. In this example, it has a structure formed by cells 9 alveolar or honeycomb and it is of a synthetic material, e.g. polypropylene.

The top layer 7 has a thickness "b" selected between 4 and 8 mm, in this example of 6.8 mm.

The top layer 7 consists of a plurality of wood sheets, e.g. of birch or beech wood, assembled into a plywood sheet 10, and it is sandwiched between a facing layer 11 and a reinforcing layer 12. The facing layer 11 is a suitable synthetic material having good antiwear, antislide, waterproof, flame-resistant properties and being washable, e.g. a phenolic resin. The reinforcing layer 12 is a metallic or fiber laminate, e.g. Kevlar or glass fiber.

At the top layer periphery, i.e. all along the longitudinal and transverse edges of the board, an undercut 13 is provided, the undercut being a few millimeters deep and a few centimeters wide.

The bottom layer 8 is of a metal sheet, preferably of light alloy such as aluminum alloy, or of a fibrous material, e.g. glass fiber or Kevlar. The thickness "c" of the layer 8 is chosen between 0.2 and 1.2 mm. Lower values are chosen for metallic materials and higher values for synthetic materials. A preferred material is steel and its thickness of 0.4 mm.

The board 5 is completed with a framework, generally designated with 14.

The framework 14 comprises rod-like inserts 15 which are transversely embedded in the thickness of layer 6. The rod-like inserts 15 are made of metal, e.g. from square box-like sectional stock of aluminum whose side dimension equals the thickness of the layer 6. Alternatively, the rod-like inserts 15 could be formed from a synthetic material, with or without reinforcing fibers. The inserts 15 are integral with the board layers through proper adhesive, e.g. using a two-part adhesive.Preferably, the top and bottom surfaces of the rod-like inserts are irregular as shown at 15a, e.g. with a sawtooth pattern of score lines.

The framework 14 further comprises two stringers 16, 17 having a substantially C-shaped cross-section and extending along the longitudinal sides of the board 5.

In particular, the stringers 16 and 17 are preferably made through aluminum extrusions and have a top wing 18, a core 19, and a bottom wing 20. They are applied to the board edges in a with prefixed driving and there adhesively arranged, e.g. using a two-part adhesive. The top wing 18 and bottom wing 20 have irregular surfaces as shown at 18a and 20a, respectively, e.g. with sawtooth score lines to enhance the adhesive bond.

The core 19 is box-like with a bottom extension 19a, also box-like, and a further rod-like extension 19b, jointly giving the extrusion a substantially F-shaped overall cross-section. The extension 19a, additionally to its stiffening function, is a base for etching various equipping elements as well as a cableway. The extension 19b serves a stiffening function and, in addition, carries tarpaulin points of attachment.

The top wing 18 fits in the undercut 13 so that the top surface of the board is perfectly plane.

The framework 14 further includes two stringers 21, 22, preferably extruded from aluminum and having the same cross-sectional shape as the stringers 16 and 17, which extend along the transversal sides of the board 5 to which they are fixed as described for the stringers 16 and 17.

It should be noted that the rod-like inserts 15, like stringers 21 and 22are cross-members of the vehicle main frame 3, and work as such. Similarly, the stringers 16 and 17 are stringers of the frame 3, and work as such. In other words, the vehicle main frame 3 results from the combination of the two longitudinal members 23, 24 and the framework 14.

The board 5 is secured on the frame longitudinal members 23 and 24 of the main frame 3 through fixing means 25 which consist of respective spacers 26 and 27, preferably in the form of Z-shaped section stringers whose top and bottom wings 28 and 29 are respectively attached to the floor and to the longitudinal member, by means of screws and adhesive.

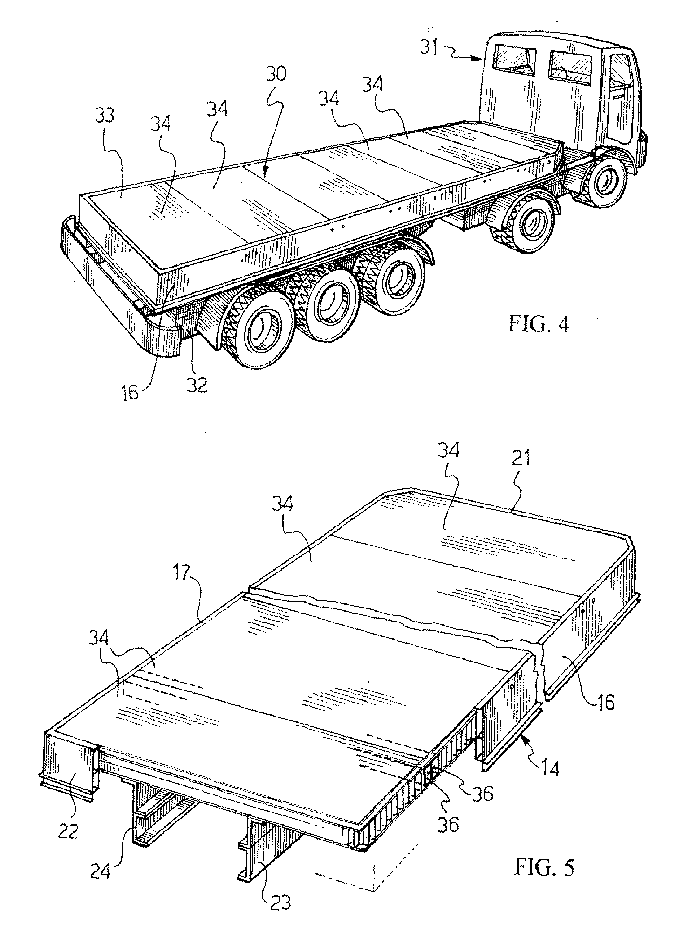

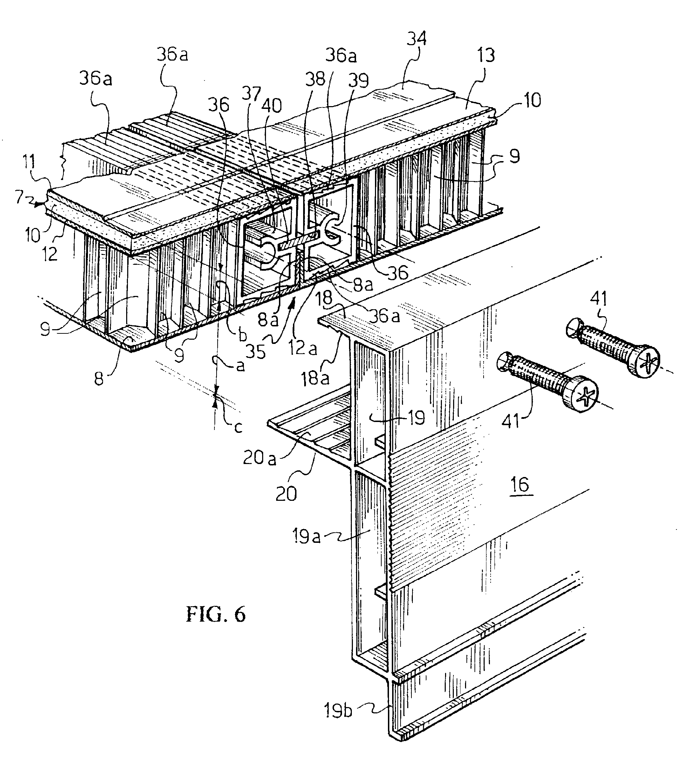

A floor 30 according to a modified embodiment of the invention will now be described with reference to Figures 4, 5 and 6. The floor 30 is suitable for load 31 carrying, e.g. a commercial or industrial vehicle, specifically a big truck such as an articulated vehicle, having a main frame 32 on which the floor 30 is mounted.

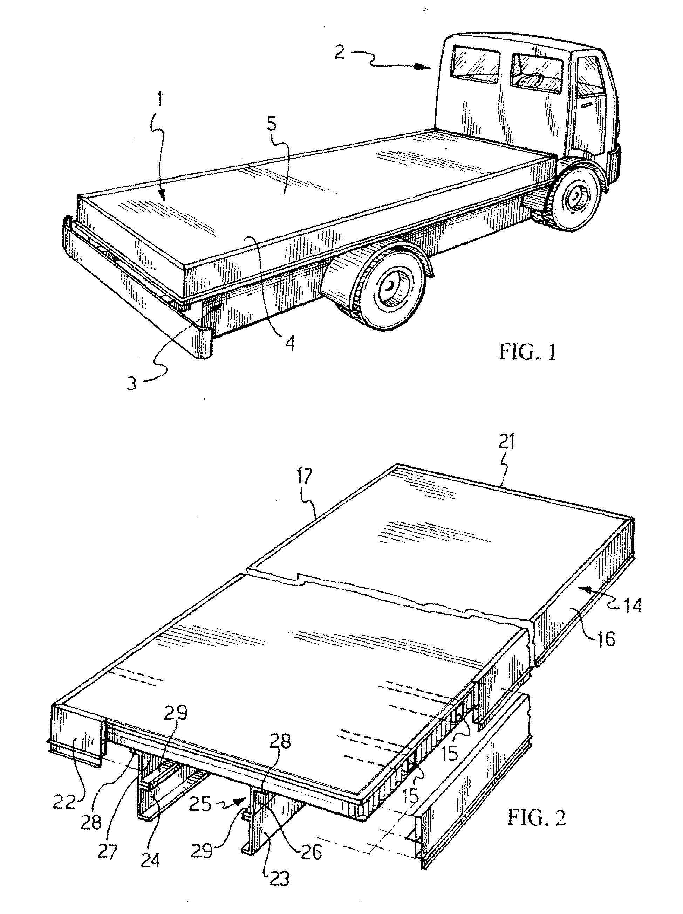

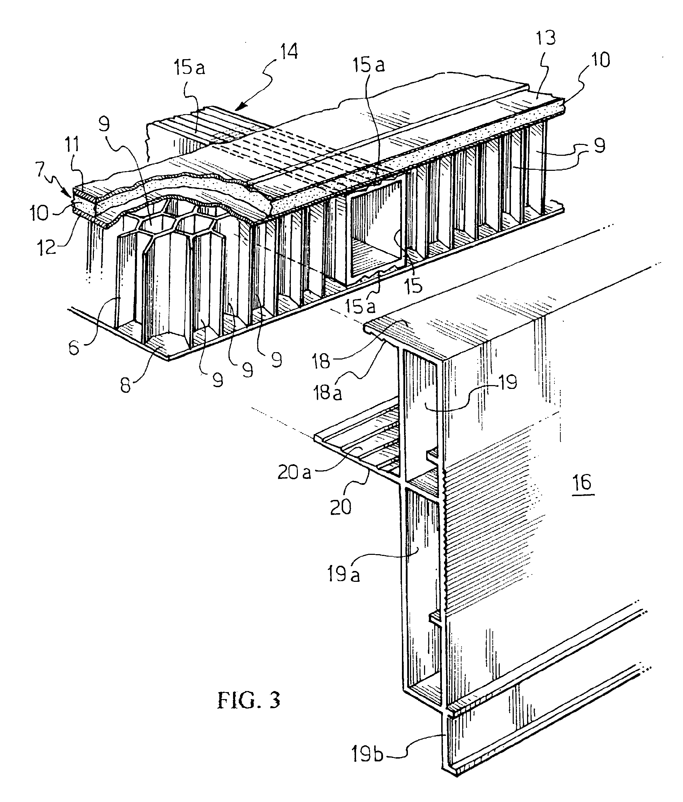

In Figures 4, 5 and 6, parts having the same or similar structure and function as in Figures 1, 2 and 3 are denoted by the same numeral references and no further described.

The floor 30 comprises a board 33 which is split into a plurality of successive short boards 34 assembled together as segments of the floor board. The panels 34 are all identical and set one after another to form the desired floor length. A joint 35 is provided between adjacent panels 34 for mutual connection.

In particular, the joint 35 is made of two identical rod-like inserts 36 that fit between two facing ends of the boards or board segments 34 and there held by using a suitable two-part adhesive. Each rod-like insert 36 has a box-like section, and has irregular top and bottom surfaces scored with sawtooth score lines 36a for enhanced adhesive bond. Each rod-like insert 36 has an inner ribbing 37. The inner ribbing 37 has a mortise 38 and an open-ring termination 39. The joint 35 further incorporates a listel 40. When the joint 35 operates, the listel 40 engages the mortises 38 one another, much after the style of a classic mortise-and-tenon joint.

Tying members 41 in the form of threaded bars or screws are engaged in the open-ring terminations 39 to secure the sequenced boards 34 to a common C-shaped stringer, 16 and 17, extending all along each lengthwise edge of the floor board 33. Thus, the individual panels 34 are secured together into a unitary floor board.

It should be noted that the rod-like inserts 36 and the listel 40 are crossmembers for the vehicle main frame.

A floor according to the invention was tested statically, by loading a board 4.50 meters long and 2.13 meters wide, being secured on two longitudinal side members bearing on floor stands, and loaded in stages up to 2208 kg/m². The board withstood this loading successfully, and only inceptive sag of one longitudinal side member was to be noticed.

Dynamic tests were conducted on a running, loaded vehicle, for long times, and the behaviour observed was normal.

The principal advantage of the load-platform floor of the invention is its uniquely simple construction, the floor board constituting a self-supporting monolithic member that is quick to manufacture and allows shorter lead times while, by virtue of all its parts working in concert, the floor board shows excellent load capacity with both spread and concentrated loads.

In addition, the board could be a modular construction, so that several different sizes can be provided for but a small number of specific parts.

The invention is susceptible of retrofit, to be carried out as a vehicle is undergoing conversion or a rebuild.

It should be noted, moreover, that the floor of this invention may be added raised sides, hoops, and the like, in customized versions.

No least advantage, especially to freight vehicles, is that the inventive floor is light in weight.

It is understood that the floor described in the foregoing may be modified in many ways by the skilled person in the art within the proprietorial scope defined in the following claims.

## Claims

1. Floor (1, 30) for a vehicle (2, 31) for load carrying, for example a commercial vehicle, an industrial vehicle and like, comprising a plate-like flat structure (4) adapted to be mounted on longitudinal members (23, 24) of the main frame of the vehicle (2, 31), wherein the plate-like flat structure (4) comprises a framework (14) which forms at least a portion of the main frame when mounted, and a board (5, 33) including a number of layers (6, 7, 8), wherein one layer (6) having a cellular matrix is sandwiched between top (7) and bottom (8) layers, both of limited thickness compared to that of the cellular matrix layer (6), and wherein transverse rod-like inserts (15) which are part of the framework (14) and form cross-members of the main frame when mounted, are embedded in the thickness of the cellular matrix layer (6), resulting in a composite, structurally monolithic and self-supporting floor.

2. Floor (1,30) according to Claim 1, wherein the layer (6) having cellular matrix is a honeycomb construction.

3. Floor (1, 30) according to Claim 1, wherein the layer (6) having cellular matrix is formed from a synthetic material, preferably polypropylene.

4. Floor (1, 30) according to Claim 1, wherein the top layer (7) comprises a plurality of veneers, preferably of birch or beech wood, forming substantially a plywood sheet (10) sandwiched between a facing layer (11) of a suitable synthetic material, preferably a phenolic resin, and a stiffening layer (12) of a metal laminate or a fiber, preferably glass or Kevlar reinforced.

5. Floor (1, 30) according to Claim 1, wherein the bottom layer (8) is either of sheet metal, preferably a light alloy, preferably alloyed aluminum, or sheet of a preferably glass fiber or Kevlar reinforced material.

6. Floor (1, 30) according to Claim 1, wherein said transverse rod-like inserts (15) are from sectional metal stock, preferably aluminum or fiber-reinforced synthetic material, having a box-shaped cross-section.

7. Floor (1, 30) according to Claim 6, wherein the box-shaped cross-section is a polygon whose height equals the thickness of the layer (6) having cellular matrix.

8. Floor (1, 30) according to Claim 6, wherein the box-shaped section (15) is a square whose side dimension equals the thickness of the layer (6) having cellular matrix.

9. Floor (1, 30) according to Claim 1, wherein the framework (14) comprises sectional members (16, 17) having a substantially C-shaped cross-section and extending along the longitudinal edges of the board in the lengthwise direction thereof.

10. Floor (1, 30) according to Claim 9, wherein the longitudinal sectional members (16,17) form stringers of the main frame.

11. Floor (1, 30) according to Claim 1, wherein the framework (14) comprises sectional members (21, 22) having a substantially C-shaped cross-section and extending along the transverse edges of the board in the transverse direction thereof.

12. Floor (1, 30) according to Claim 11, wherein the transverse sectional members (21, 22) form crossmembers of the main frame.

13. Floor (1, 30) according to Claims 9 and 11, wherein the sectional members (16, 17, 21, 22) of substantially C-shaped cross-section are aluminum extrusions.

14. Floor (1, 30) according to Claim 12, wherein the substantially C-shaped cross-section consists of a box-like web (19), a box-like extension (19a), and a plate extension (19b) of the latter.

15. Floor (1, 30) according to Claim 1, **characterized in that** it comprises fastening means (25) for fastening the board to longitudinal members (23,24) of the main frame.

16. Floor (30) according to Claim 1, wherein the board (33) is split into board segments (34) laid after one another lengthwise and linked together by a joint (35).

17. Floor (30) according to Claim 16, wherein the joint (35) for the board segments comprises two crosspieces (36) lying along confronting edges of adjacent segments, comprising confronting mortises (38), and a strip-like piece (40) engaging both said mortises like a tenon.

18. Floor (30) according to Claim 17, wherein said crosspieces (36) and said strip-like piece (40) form crossmembers of the main frame.

19. Floor (30) according to Claim 17, wherein said crosspieces (36) have a box-shaped cross-section with an inner rib (37) formed with the mortise (38), and with split-ring terminations (39) providing a socket for a tying member (41) securing the longitudinal sectional members (16, 17)

20. Floor (1,30) according to Claim 15, wherein said fastening means (25) comprise connection elements (25, 27) extending between each longitudinal member of the main frame and the board, and being attached thereto.

21. Floor (1, 30) according to Claim 20, wherein the connection elements (26, 27) comprise two sectional members having a substantially Z-shaped cross-section with the flanges (28, 29) attached to the longitudinal members and the board, respectively.

22. Floor (1, 30) according to Claim 4, wherein the facing layer (11) has a knurled surface.

23. Floor (1, 30) according to Claim 1, wherein the thickness of the layer (6) having a cellular matrix is in the range of 30 to 70 mm, and is preferably 40 mm.

24. Floor (1, 30) according to Claim 1, wherein the thickness of the top layer (7) is selected to lie between 4 and 8 mm, preferably equal to 6 mm.

25. Floor (1, 30) according to Claim 1, wherein the thickness of the bottom layer (8) is selected to lie between 0.2 and 1.2 mm, with the low-end values applying to metal materials and the high-end values applying to synthetic materials, and is preferably equal to 0.4 mm where the layer is steel.

26. Floor (1, 30) according to Claim 1, wherein said layers (6, 7, 8) are adhesively bonded together.

## Patentansprüche

1. Boden (1, 30) für ein Fahrzeug (2, 31) zur Lastenbeförderung, zum Beispiel ein Lastkraftwagen, ein Industriefahrzeug und dergleichen, der einen plattenförmigen flachen Aufbau (4) umfasst, der ausgelegt ist, auf Längselementen (23, 24) des Hauptrahmens des Fahrzeugs (2, 31) befestigt zu sein, worin der plattenförmige flache Aufbau (4) einen Rahmen (14), der nach der Montage wenigstens einen Teil des Hauptrahmens bildet, und eine Platte (5, 33) umfasst, die mehrere Lagen (6, 7, 8) umfasst, wobei eine Lage (6), die ein zellenförmiges Grundgefüge aufweist, zwischen einer Ober- (7) und einer Bodenlage (8) angeordnet ist, wobei beide eine begrenzte Dicke aufweisen verglichen mit jener der zellenförmigen Grundgefügelage (6), und wobei quer verlaufende stabförmige Einsätze (15), die Teil des Rahmens (14) sind und nach der Montage Querträger des Hauptrahmens bilden, in die Dicke der zellenförmigen Grundgefügelage (6) eingebettet sind, woraus ein zusammengesetzter, strukturell einteiliger und selbsttragender Boden resultiert.

2. Boden (1, 30) nach Anspruch 1, worin die Lage (6) mit dem zellenförmigen Grundgefüge einen Wabenaufbau aufweist.

3. Boden (1, 30) nach Anspruch 1, worin die Lage (6) mit dem zellenförmigen Grundgefüge aus einem Kunststoff gebildet ist, bevorzugt aus Polypropylen.

4. Boden (1, 30) nach Anspruch 1, worin die Oberlage (7) mehrere Furniere umfasst, bevorzugt aus Birken- oder Buchenholz, die im Wesentlichen eine Sperrholzplatte (10) bilden, die zwischen einer Außenlage (11) aus einem geeigneten Kunststoff, bevorzugt einem Phenolharz, und einer Versteifungslage (12) aus einem Metallschichtstoffs oder eines Faserstoff angeordnet ist, der bevorzugt mit Glasfaser oder Kevlar verstärkt ist.

5. Boden (1, 30) nach Anspruch 1, worin die Bodenlage (8) entweder ein Blech, bevorzugt aus einer Leichtmetalllegierung, vorzugsweise legiertem Aluminium, oder eine Platte aus einem bevorzugt mit Glasfaser oder Kevlar verstärkten Material ist.

6. Boden (1, 30) nach Anspruch 1, worin die quer verlaufenden stabförmigen Einsätze (15) aus einem Metallprofilstangenmaterial gebildet sind, bevorzugt aus Aluminium oder faserverstärktem Kunststoff, das einen kastenförmigen Querschnitt aufweist.

7. Boden (1, 30) nach Anspruch 6, worin der kastenförmige Querschnitt ein Vieleck ist, dessen Höhe gleich der Dicke der Lage (6) mit dem zellenförmigen Grundgefüge ist.

8. Boden (1, 30) nach Anspruch 6, worin das kastenförmige Profil (15) ein Quadrat ist, dessen Seitenlänge gleich der Dicke der Lage (6) mit dem zellenförmigen Grundgefüge ist.

9. Boden (1, 30) nach Anspruch 1, worin der Rahmen (14) Profilelemente (16, 17) umfasst, die einen im Wesentlichen C-förmigen Querschnitt aufweisen und die sich entlang der Längskanten der Platte in deren Längsrichtung erstrecken.

10. Boden (1, 30) nach Anspruch 9, worin die Längsprofilelemente (16, 17) Längsträger des Hauptrahmens bilden.

11. Boden (1, 30) nach Anspruch 1, worin der Rahmen (14) Profilelemente (21, 22) unfasst, die einen im Wesentlichen C-förmigen Querschnitt aufweisen und die sich entlang der Querkanten der Platte in deren Querrichtung erstrecken.

12. Boden (1, 30) nach Anspruch 11, worin die Querprofilelemente (21, 22) Querträger des Hauptrahmens bilden.

13. Boden (1, 30) nach den Ansprüchen 9 und 11, worin die Profilelemente (16, 17, 21, 22) mit im Wesentlichen C-förmigem Querschnitt Aluminium-Strangpressprofile sind.

14. Boden (1, 30) nach Anspruch 12, worin der im Wesentlichen C-förmige Querschnitt aus einer kastenförmigen Rippe (19), einer kastenförmigen Verlängerung (19a) und einer Plattenverlängerung (19b) der Letzteren zusammengesetzt ist.

15. Boden (1, 30) nach Anspruch 1, **dadurch gekennzeichnet, dass** er Befestigungsmittel (25) zur Befestigung der Platte an Längselementen (23, 24) des Hauptrahmens umfasst.

16. Boden (30) nach Anspruch 1, worin die Platte (33) in Plattensegmente (34) geteilt ist, die miteinander in Längsrichtung aneinander gelegt und durch ein Verbindungselement (35) verbunden sind.

17. Boden (30) nach Anspruch 16, worin das Verbindungselement (35) für die Plattensegmente zwei Querteile (36) umfasst, die entlang gegenüberliegender Kanten angrenzender Segmente verlaufen und gegenüberliegende Nuten (38) und ein bandförmiges Teil (40) umfassen, das mit beiden Nuten wie ein Zapfen in Eingriff steht.

18. Boden (30) nach Anspruch 17, worin die Querteile (36) und das bandförmige Teil (40) Querträger des Hauptrahmens bilden.

19. Boden (30) nach Anspruch 17, worin die Querteile (36) einen kastenförmigen Querschnitt mit einer Innenrippe (37), die mit der Nut (38) ausgebildet ist, und Spaltringenden (39) aufweisen, die eine Fassung für ein Sicherungselement (41) bereitstellen, das die Längsprofilelemente (16, 17) festlegt.

20. Boden (1, 30) nach Anspruch 15, worin die Befestigungsmittel (25) Verbindungselemente (25, 27) umfassen, die sich zwischen jedem Längselement des Hauptrahmens und der Platte erstrecken und daran befestigt sind.

21. Boden (1, 30) nach Anspruch 20, worin die Verbindungselemente (26, 27) zwei Profilelemente umfassen, die einen im Wesentlichen Z-förmigen Querschnitt mit Flanschen (28, 29) aufweisen, die einerseits an den Längselementen und andererseits an der Platte befestigt sind.

22. Boden (1, 30) nach Anspruch 4, worin die Außenlage (11) eine gerändelte Oberfläche aufweist.

23. Boden (1, 30) nach Anspruch 1, worin die Dicke der Lage (6) mit einem zellenförmigen Grundgefüge in dem Bereich von 30 bis 70 mm liegt und bevorzugt 40 mm beträgt.

24. Boden (1, 30) nach Anspruch 1, worin die Dicke der Oberlage (7) so ausgewählt ist, dass sie zwischen 4 und 8 mm liegt und bevorzugt gleich 6 mm ist.

25. Boden (1, 30) nach Anspruch 1, worin die Dicke der Bodenlage (8) so ausgewählt ist, dass sie zwischen 0,2 und 1,2 mm liegt, wobei die niedrigen Grenzwerte für Metallmaterialien und die hohen Grenzwerte für Kunststoffe gelten, und bevorzugt gleich 0,4 mm ist, wenn die Lage aus Stahl besteht.

26. Boden (1, 30) nach Anspruch 1, worin die Lagen (6, 7, 8) mittels Verkleben miteinander verbunden sind.

## Revendications

1. Plancher (1, 30) pour un véhicule (2, 31) de transport de charges, par exemple un véhicule commercial, un véhicule industriel et un véhicule analogue, comprenant une structure plate en forme de plaque (4) adaptée pour être montée sur des éléments longitudinaux (23, 24) du cadre principal du véhicule (2, 31), dans lequel la structure plate en forme de plaque (4) comprend un bâti (14) qui forme au moins une partie du cadre principal quand il est monté, et une plaque (5, 33) incluant un certain nombre de couches (6, 7, 8), dans lequel une couche (6) possédant une matrice cellulaire est prise en sandwich entre les couches supérieure (7) et inférieure (8), toutes deux d'une épaisseur limitée par rapport à l'épaisseur de la couche de matrice cellulaire (6), et dans lequel des inserts transversaux en forme de barre (15), qui font partie du bâti (14) et qui forment des traverses du cadre principal quand ils sont montés, sont incorporés dans l'épaisseur de la couche de matrice cellulaire (6), ce qui permet d'obtenir un plancher composite, à structure monolithique et auto-portant.

2. Plancher (1, 30) selon la revendication 1, dans lequel la couche (6), qui possède une matrice cellulaire, est une construction à structure alvéolaire.

3. Plancher (1, 30) selon la revendication 1, dans lequel la couche (6), qui possède une matrice cellulaire, est constituée d'un matériau synthétique, de préférence du polypropylène.

4. Plancher (1, 30) selon la revendication 1, dans lequel la couche supérieure (7) comprend une pluralité de feuilles de placage, de préférence en bois de bouleau ou de hêtre, formant sensiblement une feuille de contre-plaqué (10) prise en sandwich entre une couche de revêtement (11) constituée d'un matériau synthétique approprié, de préférence une résine phénolique, et une couche de renfort (12) composée d'un stratifié métallique ou d'une fibre, de préférence renforcée de verre ou de Kevlar.

5. Plancher (1, 30) selon la revendication 1, dans lequel la couche inférieure (8) est constituée soit d'une tôle, de préférence en alliage léger, de préférence en aluminium allié, soit d'une feuille composée de préférence d'un matériau renforcé de fibres de verre ou de Kevlar.

6. Plancher (1, 30) selon la revendication 1, dans lequel lesdits inserts transversaux en forme de barre (15) sont constitués d'un matériau métallique sectionnel, de préférence d'aluminium ou d'un matériau synthétique renforcé de fibres, ayant une section transversale en forme de boîte.

7. Plancher (1, 30) selon la revendication 6, dans lequel la section transversale en forme de boîte est un polygone dont la hauteur est égale à l'épaisseur de la couche (6) qui possède une matrice cellulaire.

8. Plancher (1, 30) selon la revendication 6, dans lequel la section transversale en forme de boîte (15) est un carré dont la dimension latérale est égale à l'épaisseur de la couche (6) qui possède une matrice cellulaire.

9. Plancher (1, 30) selon la revendication 1, dans lequel le bâti (14) comprend des éléments sectionnels (16, 17) ayant une section transversale sensiblement en forme de C et s'étendant le long des bords longitudinaux de la plaque dans le sens de la longueur de celle-ci.

10. Plancher (1, 30) selon la revendication 9, dans lequel les éléments sectionnels longitudinaux (16, 17) forment les longerons du cadre principal.

11. Plancher (1, 30) selon la revendication 1, dans lequel le bâti (14) comprend des éléments sectionnels (21, 22) ayant une section transversale sensiblement en forme de C et s'étendant le long des bords transversaux de la plaque dans le sens transversal de celle-ci.

12. Plancher (1, 30) selon la revendication 11, dans lequel les éléments sectionnels transversaux (21, 22) forment des traverses du cadre principal.

13. Plancher (1, 30) selon les revendications 9 et 11, dans lequel les éléments sectionnels (16, 17, 21, 22) ayant une coupe transversale sensiblement en forme de C sont des profilés en aluminium.

14. Plancher (1, 30) selon la revendication 12, dans lequel la section transversale sensiblement en forme de C est constituée d'une cloison en forme de boîte (19), d'une extension en forme de boîte (19a) et d'une extension en forme de plaque (19b) de cette dernière.

15. Plancher (1, 30) selon la revendication 1, **caractérisé en ce qu'**il comprend des moyens de fixation (25) pour fixer la plaque aux éléments longitudinaux (23, 24) du cadre principal.

16. Plancher (30) selon la revendication 1, dans lequel la plaque (33) est divisée en segments de plaque (34) disposés les uns après les autres dans le sens de la longueur et reliés ensemble par un joint (35).

17. Plancher (30) selon la revendication 16, dans lequel le joint (35) pour les segments de plaque comprend deux pièces transversales (36) situées le long des bords opposés des segments adjacents, comprenant des mortaises opposées (38), et une pièce en forme de bande (40) s'enclenchant avec les deux mortaises comme un tenon.

18. Plancher (30) selon la revendication 17, dans lequel lesdites pièces transversales (36) et ladite pièce en forme de bande (40) forment des traverses du cadre principal.

19. Plancher (30) selon la revendication 17, dans lequel lesdites pièces transversales (36) ont une section transversale en forme de boîte avec une nervure interne (37) formée par la mortaise (38) et avec des extrémités en forme de bague fendue (39) fournissant une douille pour un élément de lien (41) fixant les éléments sectionnels longitudinaux (16, 17).

20. Plancher (1, 30) selon la revendication 15, dans lequel lesdits moyens de fixation (25) comprennent des éléments d'assemblage (25, 27) s'étendant entre chaque élément longitudinal du cadre principal et la plaque et fixés à ceux-ci.

21. Plancher (1, 30) selon la revendication 20, dans lequel les éléments d'assemblage (26, 27) comprennent deux éléments sectionnels ayant une section transversale sensiblement en forme de Z avec les brides (28, 29) fixées aux éléments longitudinaux et à la plaque, respectivement.

22. Plancher (1, 30) selon la revendication 4, dans lequel la couche de revêtement (11) a une surface moletée.

23. Plancher (1, 30) selon la revendication 1, dans lequel l'épaisseur de la couche (6) possédant une matrice cellulaire est située dans la plage de 30 à 70 mm et est égale de préférence à 40 mm.

24. Plancher (1, 30) selon la revendication 1, dans lequel l'épaisseur de la couche supérieure (7) est sélectionnée pour se situer entre 4 et 8 mm et être égale de préférence à 6 mm.

25. Plancher (1, 30) selon la revendication 1, dans lequel l'épaisseur de la couche inférieure (8) est sélectionnée pour être située entre 0,2 et 1,2 mm, les valeurs les plus basses s'appliquant aux matériaux métalliques et les valeurs les plus hautes s'appliquant aux matériaux synthétiques, et est égale de préférence à 0,4 mm lorsque la couche est en acier.

26. Plancher (1, 30) selon la revendication 1, dans lequel lesdites couches (6, 7, 8) sont fixées ensemble de manière adhésive.
